# FASCICULE DE BREVET EUROPEEN

(11) **EP 3 665 124 B1**
(45) Date de publication et mention de la délivrance du brevet: **29.09.2021**
(21) Numéro de dépôt: 18750452.7
(22) Date de dépôt: 10.08.2018
(51) Int. Cl.: C01B 25/01, C01B 25/22, C01B 25/225, C01B 25/226, C01B 25/32

(54) **PROCEDE D'ATTAQUE ACIDE D'UNE SOURCE PHOSPHATEE**
VERFAHREN ZUM ÄTZEN EINER PHOSPHATQUELLE UNTER VERWENDUNG VON SÄURE
METHOD FOR ETCHING A PHOSPHATE SOURCE USING ACID

(30) Priorité: 11.08.2017 BE 201705554
(43) Date de publication de la demande: 17.06.2020
(73) Titulaire: Prayon S.A., 4480 Engis (BE)
(72) Inventeur: WAVREILLE, Alexandre, 4480 Engis (BE); NINANE, Léon, 29120 Combrit (FR)
(74) Mandataire: Gevers Patents
(86) Numéro de dépôt international: PCT/EP2018/071818
(87) Numéro de publication internationale: WO 2019/030403

(56) Documents cités:
- WO-A2-2004/002888
- GB-A- 793 801
- US-A- 4 154 799
- ABDUL QADIR, MUHAMMAD ET AL: "Synthesis of dicalcium phosphate potential cost-effective raw material", INTERNATIONAL JOURNAL OF CHEMICAL SCIENCES CODEN: IJCSI, vol. 12, no. 1, 2014, pages 111-120, XP055470006, ISSN: 0972-768X
- DATABASE WPI Week 201723 Thomson Scientific, London, GB; AN 2017-09705U XP002780455, & CN 106 348 266 A (GUIZHOU CHANHEN CHEM CORP) 25 janvier 2017 (2017-01-25)

## Description

La présente invention se rapporte à un procédé d'attaque acide d'une source de phosphate comprenant du calcium. pour la production d'un composé purifié à base de phosphate.

Les attaques acides d'une source de phosphate comprenant du calcium sont bien connues de l'état de la technique.

Un procédé classique de ce type consiste à faire réagir la roche phosphatée avec de l'acide sulfurique dans des conditions donnant lieu à une cristallisation de sulfate de calcium dihydrate ou gypse (CaSO₄.2H₂O). La bouillie de gypse obtenue dans un premier réacteur peut être ensuite soumise, dans un second réacteur, à une maturation permettant un grossissement des grains de sulfate formés, et cela pour augmenter la filtrabilité. La bouillie maturée est ensuite filtrée avec obtention d'un acide phosphorique présentant une teneur en P₂O₅ libre de l'ordre de 25 à 35 % en poids.

On connaît également des procédés de production d'acide phosphorique par attaque à l'acide sulfurique donnant, à des températures et concentrations en P₂O₅ et/ou SO₃ plus élevées, une bouillie de sulfate de calcium sous forme d'hémihydrate (CaSO₄. ½ H₂O) ou d'anhydrite. Ces procédés donnent généralement un acide phosphorique concentré et un sulfate bien filtrable, mais le rendement d'extraction du P₂O₅ de ces procédés est inférieur au procédé classique. Dans certain cas, on procède également, après cette attaque, à une conversion du sulfate de calcium hémihydrate obtenu en sulfate de calcium dihydrate (Ullman's Encyclopedia of Industrial Chemistry, 2008, pages 8 et 9).

On connaît ensuite un procédé dans lequel on soumet à nouveau la roche phosphatée aux conditions d'attaque du procédé classique de façon à obtenir une première bouillie dans laquelle le gypse formé présente une taille de grains permettant une bonne filtration. Une partie de cette première bouillie est alors prélevée et soumise à des conditions dans lesquelles le gypse est converti en hémihydrate, en formant ainsi une seconde bouillie. Le reste de la première bouillie est alors mélangé à la seconde et le tout est filtré (voir WO 2005/118470).

Un problème majeur de la production d'acide phosphorique réside dans l'épuisement des gisements de minerais de phosphate riches en P₂O₅. Ces gisements ont été exploités. Il faut à présent se tourner vers des minerais dont la concentration en P2O5 est considérée comme pauvre, par exemple des teneurs en P₂O₅ de 25 % en poids ou moins par rapport à la roche phosphatée, et dans certains cas 20% ou moins.

Un procédé permettant d'exploiter de tels minerais et d'en extraire un acide phosphorique de production de haute qualité a été décrit dans la demande de brevet internationale WO2011/067321. Les conditions d'attaque de ce procédé prévoient une réaction sensiblement stœchiométrique entre l'acide sulfurique introduit et le calcium contenu dans la roche phosphatée, tandis que la teneur en P₂O₅ libre dans la bouillie de cristallisation est maintenue élevée entre 38 et 50% en poids et la température entre 70 et 90°C. D'une manière surprenante, ces conditions donnent lieu à de très fins cristaux de dihydrate stable. Cette bouillie est alors soumise à une augmentation de température pendant laquelle les grains de dihydrate se solubilisent et libèrent le P₂O₅ non attaqué ou cocristallisé, tandis qu'on obtient une cristallisation de sulfate de calcium hémihydrate bien filtrable et un acide phosphorique de production à très faible teneur en SO₃ libre. Il faut noter que ces minerais pauvres en P₂O₅ présentent fréquemment en outre des teneurs de plus en plus élevées en impuretés. La teneur en impuretés est communément exprimée par le rapport (Al₂O₃ + Fe₂O₃ + MgO)/P₂O₅ X 100, noté aussi MER (Minor Elément Ratio). Les phosphates dits classiques sont caractérisés par un rapport MER d'environ 5 jusqu'à 8.

Au-delà de 10, la teneur en impuretés est si importante qu'elle commence à influencer négativement la cristallisation du sulfate de calcium sous forme de gypse lors de l'attaque du minerai par l'acide sulfurique. A ces teneurs en impuretés, la production d'acide phosphorique devient problématique, notamment à cause des difficultés de cristallisation de sulfate de calcium dihydrate et de filtration de celui-ci. Cela présente donc un gros inconvénient dans tous les procédés où une filtration a lieu directement après l'attaque de la roche phosphatée.

Dans un procédé tel que décrit dans la demande de brevet WO2011/067321, la cristallisation en gypse est également affectée par les impuretés, mais étant donné que ce gypse n'est pas destiné à être filtré, cela ne porte pas à conséquence.

Le document WO2012/163425 a quant à lui pour but de mettre au point un procédé de production d'acide phosphorique par attaque de roche phosphatée de pauvre qualité au moyen d'acide sulfurique qui permette d'obtenir un acide phosphorique de production de qualité et un bon rendement d'extraction du P₂O₅ à partir de la roche. Ce procédé doit en outre pouvoir aisément être appliqué dans une installation classique existante et donc ne pas nécessiter de transformations coûteuses et indéfendables économiquement parlant. Selon ce document, le procédé comprend, pendant l'attaque, un ajout d'une source de fluor dans la première bouillie en une teneur de 1 % à 5% en poids de F par rapport au P₂O₅ contenu dans la roche phosphatée. Les conditions d'attaque sont telles qu'elles prévoient une réaction sensiblement stœchiométrique entre l'acide sulfurique introduit et le calcium contenu dans la roche phosphatée, principalement sous forme de carbonate et de phosphate de calcium. La phase aqueuse acide de cette première bouillie résultant de l'attaque ne contient pas ou extrêmement peu d'acide sulfurique libre et sa teneur en P₂O₅ libre est assez élevée.

Comme on peut le constater, la difficulté de la production d'acide phosphorique à partir de roches phosphatées est toujours d'avoir un rendement d'attaque suffisant, une qualité d'acide acceptable ainsi qu'un sulfate de calcium plus ou moins facilement valorisable et dans ce cadre, il est généralement admis que l'attaque de roches phosphatées par de l'acide sulfurique concentré doit être conduite à la stœchiométrie afin de produire un acide phosphorique brut et d'assurer un taux d'extraction du P₂O₅ suffisant et économiquement rentable.

Dans le cas de la production d'acide phosphorique réalisée par une attaque de roches phosphatées par de l'acide sulfurique à la stœchiométrie, la réaction s'écrit :

(I) Ca₃(PO₄)₂ + 3 H₂SO₄ → 3 CaSO₄.2H₂O + 2 H₃PO₄

Dans laquelle le rapport molaire SO₄/Ca = 3/3, soit = 1

Il est également connu à partir de cet acide phosphorique ainsi produit d'ajouter une base calcique pour produire un phosphate bicalcique (DCP) de grade alimentaire (pour l'homme ou l'animal) ou pour toute autre application.

Ainsi, on connait du document GB-938468 la production de phosphate monocalcique (MCP) ou de phosphate bicalcique (DCP) à partir de roches phosphatées ou de minerai naturel avec de l'acide chlorhydrique.

Le document WO 2015/082468 décrit également une attaque à l'acide chlorhydrique de roches phosphatées.

Malheureusement, ces procédés d'attaque à l'acide chlorhydrique requièrent la présence d'une étape de lavage du DCP pour éliminer les ions chlorures qui ne peuvent par exemple pas se trouver dans certains grades de DCP techniques. Les procédés à l'acide chlorhydrique génèrent un chlorure de calcium résiduaire dans lequel une partie des impuretés de la matière première vont s'accumuler. Cette solution requiert des traitements complémentaires d'épuration afin d'être utilisée. De plus, la présence d'acide chlorhydrique dans la cuve d'attaque provoque des problèmes de corrosion dans les installations dès que la température est supérieure ou égale à 60°C.

On connait également un procédé d'attaque de roches phosphatées à l'aide d'acide sulfurique du document US3161466. Dans le procédé décrit dans ce document, une première attaque sulfurique est réalisée dans une cuve d'attaque avec obtention d'une bouillie pâteuse, qui peut être laissée pour maturation ou bien être transférée dans une deuxième cuve ou elle subira une attaque additionnelle à l'acide. Ce procédé se base sur un contrôle séquentiel du pH, les augmentations de pH incrémentales servant à précipiter sélectivement les différentes impuretés présentes dans la phase liquide (liqueur). La liqueur contient du MCP et de l'acide phosphorique en quantités élevées.

Malheureusement, ce procédé décrit est contraignant en ce qu'il requiert des contrôles de pH rigoureux à chaque étape étant donné la précipitation sélective enseignée, mais aussi peu économique au vu des nombreuses étapes impliquées et donc du temps requis pour traiter la roche phosphatée.

Enfin, un autre procédé est décrit dans le document GB793801. Dans ce document, le procédé décrit comprend une attaque à l'acide sulfurique concentré de 14 à 62 % de roches phosphatées de manière sous-stœchiométrique. Le but du procédé décrit est la récupération des terres rares comprises dans la roche phosphatée. Par conséquent, une des étapes critiques réside dans la dissolution complète de la roche phosphatée pour former une phase liquide à partir de laquelle les terres rares contenues seront extraites. Le procédé comprend donc un ajout de silice réactive pour maintenir les terres rares en solution et nécessite un temps d'attaque d'environ 24 heures. Les teneurs en P₂O₅ par rapport au calcium (P₂O₅/Ca) divulguées vont de 10/1 à 4/1.

Comme on peut le constater, ce procédé est consommateur de temps et implique un coût de traitement de la roche phosphatée conséquent, dû au fait que le procédé est probablement rentabilisé par l'extraction des terres rares qui présentent une valeur marchande importante. Toutefois, dans une approche visant à produire une matière à base de phosphate purifiée, la rentabilité économique de ce procédé est à remettre en question.

L'invention a pour but de pallier les inconvénients de l'état de la technique en procurant un procédé économiquement rentable autour d'un optimum entre le coût énergétique, coût de production, résistance des matériaux utilisés dans les dispositifs de production et la flexibilité des matières premières.

En effet, un des objets de la présente invention est de procurer un procédé permettant de traiter des roches concentrées en matière phosphatée autant que des roches peu concentrées en matière phosphatée et des sources de phosphate secondaires.

Pour résoudre ce problème, il est prévu suivant l'invention un procédé d'attaque acide d'une source de phosphate comprenant du calcium pour la production d'un composé purifié à base de phosphate tel qu'indiquée au début comprenant les étapes de
a) une attaque acide à l'aide d'acide sulfurique de ladite source de phosphate, pendant une période de temps prédéterminée comprise entre 20 et 180 minutes avec formation d'une première suspension contenant une première matière solide et une première phase liquide dans laquelle la première matière solide est en suspension, ladite première matière solide comprenant au moins du sulfate de calcium et des impuretés, ladite première phase liquide comprenant de l'acide phosphorique et du phosphate monocalcique dissous, ladite attaque étant réalisée dans des conditions à l'entrée selon lesquelles le ratio molaire sulfate provenant de l'acide sulfurique ainsi qu'éventuellement de la source de phosphate au calcium est compris entre 0,6 et 0,8, et la teneur en P₂O₅ est inférieure à 6%,
b) une première filtration de ladite première bouille avec une séparation de ladite première matière solide de ladite première phase liquide,
c) une récupération à partir de ladite première phase liquide d'un composé purifié à base de phosphate.

Avantageusement, ladite teneur en P₂O₅ est une teneur en P₂O₅ dissous dans ladite première phase liquide.

Le ratio molaire SO₄/Ca définit la quantité d'acide nécessaire à l'attaque de la source de phosphate contenant le Ca à l'entrée des réactifs.

Avantageusement, ladite attaque acide a lieu dans 1, 2 ou plusieurs cuves d'attaque.Comme on peut le constater, le procédé suivant la présente invention est un procédé d'attaque dans des conditions fortement sous-stœchiométriques, le ratio molaire sulfate provenant de l'acide sulfurique ainsi qu'éventuellement de la source de phosphate au calcium (SO₄/Ca) présent dans la source de phosphate étant compris entre 0,6 et 0,8 présente de multiples avantages. Tout d'abord, la consommation d'acide sulfurique est réduite et une multitude de sources de phosphate peut être traitée par le procédé selon la présente invention dans le but de produire différents composés purifiés à base de phosphate. En effet, le procédé selon la présente invention permet d'obtenir une phase liquide contenant de l'acide phosphorique et du phosphate monocalcique à partir de laquelle du phosphate bicalcique peut également être obtenu, offrant de cette manière une grande flexibilité. En effet, ce phosphate dicalcique peut être attaqué pour produire un acide phosphorique relativement pur ainsi que ses dérivés. De plus, le temps d'attaque est relativement court, baissant de cette manière par l'action conjointe de la flexibilité concernant la source de phosphate et la multiplicité des produits obtenus, les coûts de production. Les coûts de maintenance pourront également être réduits grâce à la faible agressivité du milieu réactionnel.

Pour atteindre le ratio molaire sulfate provenant de l'acide sulfurique ainsi qu'éventuellement de la source de phosphate au calcium, la teneur en calcium se base principalement sur la teneur en calcium présent dans la source de phosphate, mais il est toutefois possible d'en ajouter le cas échéant.

Avantageusement, le procédé selon l'invention comprenant les étapes de :
- une attaque acide dans 1, 2, ou plusieurs cuves d'attaque à l'aide d'acide sulfurique de ladite source de phosphate pendant une période de temps prédéterminée comprise entre 20 et 180 minutes avec formation d'une première suspension contenant une première matière solide et une première phase liquide dans laquelle la première matière solide est en suspension, ladite première matière solide comprenant au moins du sulfate de calcium et des impuretés, ladite première phase liquide comprenant de l'acide phosphorique et du phosphate monocalcique dissous, ladite attaque étant réalisée dans des conditions à l'entrée selon lesquelles le ratio molaire sulfate provenant de l'acide sulfurique ainsi qu'éventuellement de la source de phosphate au calcium présent dans la source de phosphate est compris entre 0,6 et 0,8 et la teneur en P₂O₅ dans la ou les cuves d'attaque est inférieure à 6%,
- une première filtration de ladite première bouille avec une séparation de ladite première matière solide de ladite première phase liquide, et
- une récupération à partir de ladite première phase liquide d'un composé purifié à base de phosphate.

Le ratio molaire SO₄/Ca définit la quantité d'acide nécessaire à l'attaque de la source de phosphate contenant le Ca à l'entrée des réactifs dans la ou les cuves d'attaque.

Avantageusement, le procédé selon l'invention comprenant les étapes de :
- une attaque acide dans 1, 2, ou plusieurs cuves d'attaque à l'aide d'acide sulfurique de ladite source de phosphate pendant une période de temps prédéterminée comprise entre 20 et 180 minutes avec formation d'une première suspension contenant une première matière solide et une première phase liquide dans laquelle la première matière solide est en suspension, ladite première matière solide comprenant au moins du sulfate de calcium et des impuretés, ladite première phase liquide comprenant de l'acide phosphorique et du phosphate monocalcique dissous, ladite attaque étant réalisée dans des conditions à l'entrée selon lesquelles le ratio molaire sulfate provenant de l'acide sulfurique ainsi qu'éventuellement de la source de phosphate au calcium est compris entre 0,6 et 0,8 et la teneur en P₂O₅ dans la ou les cuves d'attaque est inférieure à 6%,
- une première filtration de ladite première bouille avec une séparation de ladite première matière solide de ladite première phase liquide, et
- une récupération à partir de ladite première phase liquide d'un composé purifié à base de phosphate.

Le ratio molaire SO₄/Ca définit la quantité d'acide nécessaire à l'attaque de la source de phosphate contenant le Ca à l'entrée des réactifs dans la ou les cuves d'attaque.

Avantageusement, ladite étape a) d'attaque acide comprend:
- une attaque acide dans une cuve d'attaque, ou
- une attaque acide dans une première cuve d'attaque avec ajout d'acide sulfurique et transfert de ladite première suspension formée ou en train d'être formée dans la première cuve d'attaque vers une deuxième cuve d'attaque sans ajout d'acide sulfurique, ou
- une attaque acide dans deux cuves d'attaque successives avec ajout d'acide sulfurique dans les 2 cuves, ou
- une attaque acide dans trois cuves d'attaque, ou
- une attaque acide dans une première cuve d'attaque avec ajout d'acide sulfurique et transfert de ladite première suspension formée ou en train d'être formée dans la première cuve vers une deuxième et une troisième cuve d'attaque sans ajout d'acide sulfurique, ou
- une attaque acide dans une première cuve d'attaque et une deuxième cuve d'attaque avec ou sans ajout d'acide sulfurique et transfert de ladite première suspension formée ou en train d'être formée dans la première cuve d'attaque et dans la deuxième cuve d'attaque vers une troisième cuve d'attaque sans ajout d'acide sulfurique.

Dans un mode particulier de réalisation, le procédé selon l'invention comprenant les étapes de :
- une attaque acide dans une cuve d'attaque à l'aide d'acide sulfurique de ladite source de phosphate pendant une période de temps prédéterminée comprise entre 20 et 180 minutes avec formation d'une première suspension contenant une première matière solide et une première phase liquide dans laquelle la première matière solide est en suspension, ladite première matière solide comprenant au moins du sulfate de calcium et des impuretés, ladite première phase liquide comprenant de l'acide phosphorique et du phosphate monocalcique dissous, ladite attaque étant réalisée dans des conditions à l'entrée selon lesquelles le ratio molaire sulfate provenant de l'acide sulfurique ainsi qu'éventuellement de la source de phosphate au calcium présent dans la source de phosphate est compris entre 0,6 et 0,8 et la teneur en P₂O₅ dans la cuve d'attaque est inférieure à 6%,
- une première filtration de ladite première bouille avec une séparation de ladite première matière solide de ladite première phase liquide, et
- une récupération à partir de ladite première phase liquide d'un composé purifié à base de phosphate.

Le ratio molaire SO₄/Ca définit la quantité d'acide nécessaire à l'attaque de la source de phosphate contenant le Ca à l'entrée des réactifs dans la cuve d'attaque.

Il est en effet apparu de manière surprenante que la combinaison de conditions fortement sous-stœchiométriques (quantité faible d'acide sulfurique disponible pour attaquer la source de phosphate) avec un temps d'attaque court permet la production de composé purifié à base de phosphate aisément valorisable et rentable économiquement, le tout alors que la concentration en P₂O₅ dans la ou les cuves d'attaque est faible mais toutefois de pureté suffisante pour rentrer dans différentes productions ultérieures, notamment, sans toutefois y être limité, dans la production de DCP à échelle industrielle et de grade alimentaire. Par conséquent, dans le procédé selon la présente invention, l'extraction de P₂O₅ à partir de nombreuses sources de phosphate est à l'optimum, que les sources de phosphate soient concentrées en phosphate ou non. Ceci signifie qu'une fois que ce procédé est implanté sur un site de production, l'industriel peut alors exploiter des roches conventionnelles concentrées en phosphate de calcium, mais également les roches moins concentrées en phosphate de calcium ou encore tout produit secondaire contenant du phosphate de calcium.

Par l'utilisation de ratio molaire sulfate provenant de l'acide sulfurique ainsi qu'éventuellement de la source de phosphate au calcium présent dans la source de phosphate compris entre 0,6 et 0,8, le rapport de la matière solide à la phase liquide est faible c'est-à-dire que la densité de suspension est faible. Le sulfate présent dans la ou les cuves d'attaque provient principalement de la roche mais il peut également provenir de la source de phosphate ainsi qu'éventuellement de l'eau de dilution. En, effet, la teneur en matière solide dans la ou les cuves d'attaque est typiquement inférieure à 16%, préférentiellement comprise entre 4% et 15%, procurant ainsi une suspension au lieu d'une bouillie et la présence de teneur basse en matière solide, typiquement contre intuitif dans un procédé de traitement de source de phosphate dans lequel la durée d'attaque est courte, l'acide sulfurique est dilué et dans lequel une étape de filtration est nécessaire.

Dans le procédé selon la présente invention, la réaction est sous-stœchiométrique, selon la réaction
Ca₃(PO₄)₂ + 2 H₂SO₄ + H₂O → 2 CaSO₄.2H₂O + Ca(H₂PO₄)₂ avec un rapport molaire théorique SO₄/Ca autour de 0,66.

Par la mise en œuvre d'un ratio molaire sulfate provenant de l'acide sulfurique ainsi qu'éventuellement de la source de phosphate au calcium présent dans la source de phosphate compris entre 0,6 et 0,8 aussi proche que possible du rapport théorique SO₄/Ca, les conditions d'attaque permettent de rester majoritairement sous la courbe de précipitation du calcium avec l'ion phosphate et donc de produire du MCP soluble dans la phase liquide acide, où le rendement d'extraction du P₂O₅ a été mesuré à plus de 90%.

Dans un mode de réalisation particulier, le ratio molaire sulfate provenant de l'acide sulfurique ainsi qu'éventuellement de la source de phosphate au calcium compris entre 0,6 et 0,8 peut être obtenu en ajoutant du calcium dans le système si la source de phosphate ne contient pas de calcium.

Par les termes « attaque acide à l'aide d'un acide minéral, de préférence un acide sulfurique d'une source de phosphate pendant une période de temps prédéterminée », on entend que la période de temps prédéterminée est le temps de séjour moyen dans une ou plusieurs cuve d'attaque, que ce soit lors d'une attaque en batch ou en continu, avec éventuellement une phase de recyclage, comme indiqué plus loin.

Dans le procédé selon la présente invention, la première matière solide comprend du phosphate de calcium non attaqué ainsi que du sulfate de calcium (sulfate de calcium hemihydraté, anhydrite, ou gypse) et des impuretés. Le sulfate de calcium étant majoritairement présent sous forme de gypse (sulfate de calcium di -hydraté)

Par les termes « phosphate monocalcique », on entend un composé de formule Ca(H₂PO₄)₂ (MCP) comportant plusieurs appellations anglaises telles que monocalcium phosphate, monobasic calcium phosphate, calcium biphosphate, calcium acid phosphate, acid calcium phosphate, mono basic calcium phosphate, calcium dihydrogen phosphate.

Avantageusement, la période de temps prédéterminée est inférieure à 120 minutes, de préférence inférieure à 90 minutes, plus préférentiellement inférieure à 60 minutes, en particulier inférieure à 45 minutes et plus particulièrement environ égale à 30 minutes.

Comme on peut le constater, la période de temps prédéterminée durant laquelle se produit l'attaque acide peut être fortement réduite pour atteindre des temps d'attaque aussi court que 60 minutes, en particulier 45 minutes, voire même 30 minutes.

Dans une forme de réalisation particulière, la teneur en P₂O₅ dans la ou les cuves d'attaque est inférieure à 5%, de préférence comprise entre 0,5 et 4 % en P₂O₅ Préférentiellement compris entre 1,5 et 3 %.

En effet, dans le procédé selon la présente invention, la teneur en P₂O₅ est peu élevée dans le milieu d'attaque, mais celui-ci est finalement suffisamment pur, contre toute attente pour qu'il puisse ensuite être valorisé en composés purifiés à base de phosphate.

Dans une autre forme de réalisation préférentielle du procédé selon la présente invention, ladite attaque est réalisée à température ambiante.

Dans une variante préférée du procédé selon la présente invention, ladite attaque est réalisée à une température dans la ou les cuves d'attaque inférieure ou égale à 90°C, de préférence inférieure ou égale à 80°C, de manière préférentielle inférieure ou égale à 75°C, de manière plus préférentielle inférieure ou égale à 60°C, de préférence supérieur à 40°C.

En effet, selon la présente invention, il a été identifié qu'il est possible de traiter la roche par une attaque acide à une température généralement basse, certainement entre 40 et 60°C, ce qui évite tout apport de chaleur et permet encore de baisser les coûts de production dans une perspective du coût énergétique, tout en utilisant un acide sulfurique dilué, réduisant aussi les résidus SO₃ dans le composé purifié à base de phosphate

Avantageusement, l'acide sulfurique est un acide sulfurique dilué, en particulier avant ajout dans la ou les cuves d'attaque, ce qui réduit les coûts de traitement de sources de phosphate et ce autant pour des sources concentrées en phosphate ou non tout en réduisant la teneur en SO₃ dans la phase liquide.

De manière avantageuse, dans le procédé selon la présente invention, ledit acide sulfurique dilué présente une concentration en H₂SO₄ inférieure à 14% en poids, de préférence inférieur ou égale à 13%, de préférence inférieure ou égale à 10 % en poids, plus particulièrement comprise entre 0,5 et 9 % en poids, de préférence comprise entre 3 et 7 % et de manière plus préférentielle autour de 5% en poids, par rapport au poids total de l'acide sulfurique dilué.

Dans une variante, l'acide sulfurique est un acide sulfurique concentré, en particulier il sera dilué dans la ou les cuves d'attaque, l'eau de dilution pouvant être soit, de l'eau de consommation, de l'eau de rivière, de l'eau de mer, des eaux de recyclage ou des eaux issues de la production de DCP.

Comme mentionné précédemment, le ratio molaire sulfate provenant de l'acide sulfurique ainsi qu'éventuellement de la source de phosphate au calcium présent dans la source de phosphate est compris entre 0,6 et 0,8, ce qui est suffisamment faible pour approcher l'optimum du rapport théorique et maintenir le MCP et de l'acide phosphorique dans la phase liquide. Tout l'enjeu est d'avoir la solubilité du sulfate de calcium sans précipiter le phosphate de calcium. Par conséquent, lorsque de manière avantageuse, l'acide sulfurique est dilué et présente une concentration en H₂SO₄ inférieure à 14%, de préférence, inférieure ou égale à 10%, voire entre 0,5 et 9 % en poids, par rapport au poids total de l'acide sulfurique dilué, l'optimum est atteint, conjointement avec la durée prédéterminée courte de l'attaque acide, par la réduction du risque de précipiter le calcium avec les ions phosphates en solution et ainsi favoriser la formation de MCP et d'acide phosphorique dans la ou les cuves d'attaque dans la phase liquide et non sous forme précipitée car le milieu réactionnel dans la ou les cuves d'attaque est suffisamment dilué pour éviter la précipitation des sels de phosphate de calcium. Seul le sulfate de calcium, de préférence le gypse précipite dans des quantités inférieures aux procédés classiques d'attaque de sources de phosphate. Par conséquent, dans le procédé selon la présente invention, il est possible d'utiliser un acide de récupération ou recyclé de faible valeur.

Dans le procédé selon la présente invention, l'acide sulfurique peut-être un acide sulfurique dilué recyclé à partir de flux existants de l'industrie du phosphate, de la métallurgie, de la chimie, ... La phase liquide récupérée par exemple après la production de DCP par précipitation peut être recyclée pour diluer la solution d'acide sulfurique d'attaque. De préférence, l'acide sulfurique d'attaque est entreposé dans une cuve de stockage. L'acide sulfurique d'attaque peut provenir donc de recyclage d'autres étapes ou peut être obtenu par dilution d'acide concentré, comme par exemple d'acide sulfurique concentré à 98% ou moins, lequel peut être dilué avec de l'eau ou avec la phase liquide récupérée par exemple après la production de DCP par précipitation (deuxième phase liquide). Préférentiellement, la dilution de l'acide sulfurique sera réalisée en ligne lors de l'alimentation de la ou les cuves d'attaque.

Plus particulièrement, dans le procédé selon la présente invention, ledit ratio molaire sulfate provenant de l'acide sulfurique ainsi qu'éventuellement de la source de phosphate au calcium présent dans la source de phosphate est compris entre 0,68 et 0,78, de préférence entre 0,7 et 0,75 à l'entrée.

Plus particulièrement, dans le procédé selon la présente invention, ledit ratio molaire sulfate provenant de l'acide sulfurique ainsi qu'éventuellement de la source de phosphate au calcium est compris entre 0,68 et 0,78, de préférence entre 0,7 et 0,75 à l'entrée.

De préférence, le procédé selon la présente invention comprend une addition d'une base à ladite première suspension, avant filtration.

L'addition de la base à la première suspension permet de précipiter avant la filtration le fluorure de calcium (pré-neutralisation), ce qui peut s'avérer avantageux en fonction des composés finaux souhaités et leur utilisation. Si la base ajoutée est une base calcique, comme de la chaux vive ou éteinte, pulvérulente ou sous forme de lait de chaux, ou encore du calcaire, la formation de gypse avant filtration est favorisée, ce qui réduit la teneur en SO₃ résiduel dans la phase liquide.

Dans une variante, le procédé selon l'invention comprend, avant ladite étape de récupération à partir de ladite première phase liquide dudit composé purifié à base de phosphate, une addition d'une base à ladite première phase liquide après filtration avec formation d'une deuxième suspension comprenant une deuxième matière solide en suspension dans une deuxième phase liquide et une filtration de ladite deuxième suspension pour séparer ladite deuxième matière solide en suspension de ladite deuxième phase liquide, ledit composé purifié à base de phosphate étant ainsi récupéré de ladite deuxième phase liquide, provenant de la première phase liquide appauvrie en ladite deuxième matière solide, principalement du fluorure de calcium.

Dans cette forme de réalisation, si une base a été ajoutée avant la filtration, le fluorure de calcium a été éliminé durant la filtration et se trouve dans la première matière solide, peu importe que le composé purifié à base de phosphate que l'on souhaite obtenir soit du DCP ou du MCP et de l'acide phosphorique. La production de DCP passe par un ajout d'une base calcique au MCP (neutralisation), ce qui provoquerait également la précipitation du fluorure de calcium si celui-ci n'a pas été éliminé au préalable.

Si aucune base n'a été également ajoutée avant la filtration de la première suspension, la première matière solide contient essentiellement du sulfate de calcium (sulfate de calcium hémihydrate, anhydrite ou gypse), des impuretés et du phosphate non attaqué, tandis que le fluor se trouve encore dans la première phase liquide.

Lorsque l'addition de base est effectuée de manière contrôlée à la première phase liquide sensiblement appauvrie en première matière solide, mais contenant encore le fluor, on peut alors sélectivement éliminer le fluorure de calcium. Dans un tel cas, différentes étapes peuvent être envisagées ultérieurement.

Si ledit composé purifié à base de phosphate ainsi récupéré de ladite deuxième phase liquide que l'on souhaite produire est du MCP et/ou de l'acide phosphorique, la deuxième phase liquide est récupérée et ensuite traitée dans ce but.

Si ledit composé purifié à base de phosphate ainsi récupéré de ladite deuxième phase liquide que l'on souhaite produire est du DCP, la deuxième phase liquide est traitée par addition ultérieure de base calcique, comme de la chaux vive ou éteinte, pulvérulente ou sous forme de lait de chaux, ou encore du calcaire. Dans ce cas, une troisième suspension est formée suite à l'ajout de base calcique à la deuxième phase liquide qui est appauvrie en fluorure, laquelle est ensuite filtrée pour récupérer la troisième phase solide contenant le DCP.

Bien entendu, lorsque le DCP peut contenir du fluor ou lorsque la source de phosphate utilisée ne contient pas de fluor, la deuxième suspension est formée par ajout d'une base calcique, comme de la chaux vive ou éteinte, pulvérulente ou sous forme de lait de chaux, ou encore du calcaire à la première phase liquide, laquelle sera ensuite filtrée pour séparer d'une part la deuxième matière solide qui contient le DCP et d'autre part la deuxième phase liquide qui forme des eaux résiduaires, lesquelles peuvent être recyclées pour la formation de la solution d'acide sulfurique pour l'attaque acide de la source phosphatée ou pour la dilution de la ou des cuves d'attaque. Dans ce cas, l'addition contrôlée d'une base pour précipiter sélectivement le fluorure n'est pas nécessaire.

Dans une forme de réalisation particulièrement préférée, une base est ajoutée avant la filtration de la première matière solide pour précipiter les fluorures et les éliminer de la première phase liquide avec le sulfate de calcium et le phosphate de calcium non attaqué. La première phase liquide est ensuite traitée ultérieurement par ajout d'une base calcique, comme de la chaux vive ou éteinte, pulvérulente ou sous forme de lait de chaux, ou encore du calcaire pour former une deuxième suspension contenant du DCP précipité en tant que deuxième matière solide, lequel sera ensuite récupéré de la deuxième suspension par filtration, centrifugation, décantation ou tout autre moyen de séparation solide-liquide.

Que le DCP soit formé à partir de la première phase liquide ou à partir de la deuxième phase liquide, une quantité stœchiométrique de base calcique, comme mentionné ci-dessus est ajoutée à la première phase liquide ou à la deuxième phase liquide, par exemple dans un réacteur de neutralisation pour précipiter le DCP, de préférence avec contrôle du pH jusqu'à une valeur comprise entre 5 et 6.

Une manière préférentielle de précipiter le DCP est d'ajouter à la première phase liquide ou à la deuxième phase liquide du calcaire finement broyé pour neutraliser la phase liquide qui contient du MCP et de l'acide phosphorique. La neutralisation a de préférence un temps de séjour d'au moins 30 minutes afin de permettre que la réaction de neutralisation et le dégagement de CO₂ qui se produit, se terminent. Dans une forme de réalisation préférentielle, pour obtenir le pH compris entre 5 et 6, du lait de chaux est encore ajouté pour assurer la précipitation complète du DCP et extraire de cette manière l'intégralité du P₂O₅ dans le liquide résiduaire.

Plus particulièrement, dans le procédé selon la présente invention, ladite première matière solide séparée de ladite première phase liquide est recyclée pour tout ou partie par introduction dans la première suspension.

En effet, il peut être avantageux d'augmenter la teneur en matière solide dans la première suspension, soit dans la ou les cuves d'attaque, soit dans le dispositif de filtration pour aider à la filtration de celle-ci ou de pouvoir traiter le phosphate de calcium résiduel se trouvant dans la première matière solide.

La première suspension contenant du sulfate de calcium et éventuellement du fluorure de calcium est préférentiellement récupérée par tout moyen de séparation liquide/solide comme un dispositif de filtration, tel qu'un filtre rotatif fabriqué par la demanderesse, une centrifugation, une décantation, un hydrocyclonage ou un filtre à bande afin de séparer la première matière solide de la première phase liquide. La première phase liquide est une solution diluée de P₂O₅ contenant un léger excès de sulfate, par example entre 0,05 à 0,6 %, de préférence entre 0,1 et 0,25 %.

Pendant la filtration, un lavage à l'eau peut être réalisé sur le dispositif de filtration afin de déplacer l'eau interstitielle du gâteau et de récupérer les traces de P₂O₅ restant dans le gâteau de sulfate de calcium. Le sulfate de calcium est lavé et séparé. Toutefois, avant de réaliser cette opération, un recyclage de sulfate de calcium dans la ou les cuves d'attaque peut être prévu afin d'améliorer les conditions d'attaque de la source phosphatée et ainsi améliorer la précipitation du sulfate de calcium formant la première matière solide afin de faciliter la filtration de celle-ci.

Le recyclage peut être prévu soit en recyclant une partie du sulfate de calcium lavé vers la ou les cuves d'attaque et augmenter ainsi la densité de suspension en sulfate de calcium nettement au-delà de 10% en poids par rapport au poids total de la suspension.

Le recyclage peut être alternativement prévu en installant un épaississeur de la première suspension préalablement à la séparation, une partie de la suspension épaissie peut alors être prélevée et retournée dans la ou les cuves d'attaque.

Un tel recyclage permet d'augmenter la densité de matière solide dans la suspension dans la ou les cuves d'attaque et facilite l'élimination de la sursaturation en sulfate de calcium du milieu dans la ou les cuves d'attaque ; cela permet d'éviter la germination non contrôlée de cette suspension et permet d'obtenir des particules de sulfate de calcium mieux cristallisées dans la première suspension. Ce recyclage permet aussi d'éviter des réactions de blocage de la réaction d'attaque du minerai par l'acide sulfurique.

Dans une variante au sens de la présente invention, ladite deuxième matière solide séparée de ladite deuxième phase liquide est recyclée par introduction dans la première suspension ou dans la deuxième suspension. Préférentiellement lorsque la dite deuxième matière solide est du fluorure de calcium, elle ne sera pas recyclée.

En effet, dans certains cas de figure, si la filtration s'avère compliquée dû à la faible teneur en matière solide, il peut être avantageux de pouvoir augmenter la teneur en matière solide par introduction de la deuxième matière solide dans la première suspension ou dans la deuxième suspension, par exemple pour ajouter des germes favorisant la cristallisation.

En effet, lorsque du DCP est produit, la suspension qui le contient est filtrée ou centrifugée afin de séparer le DCP de la phase liquide. Comme la phase liquide est pratiquement de l'eau, il n'y a pas besoin de laver le gâteau de DCP séparé et la phase liquide peut être avantageusement recyclée dans le réservoir d'acide sulfurique, en ligne ou in-situ dans la ou les cuves d'attaque. Dans certains cas, lorsque la purification de la première phase liquide est bien menée, la quantité en impuretés est réduite, ce qui favorise justement la mise en œuvre de ce recyclage de la phase liquide récupérée après isolation du DCP.

De préférence, ladite source de phosphate est définie comme toute matière phosphatée d'origine organique ou minérale qui contient moins de 45% en poids de P₂O₅ par rapport au poids total de la matière sèche (sec 105°C) ; de préférence inférieure ou égale à 40%, de préférence inférieure ou égale à 30%, de préférence inférieure ou égale à 20%, de préférence inférieure ou égale à 10%. Dans cette source de phosphate, le calcium peut être lié ou non à l'ion phosphate, hydrogénophosphate et/ou dihydrogénophosphate. La dite source peut être choisie dans le groupe constitué de roche de phosphate conventionnelle, roche de phosphate de faible teneur en P₂O₅, de cendres de différentes origines minérales ou organiques comme les cendres de digestats anaérobies de déchets organiques, comme par exemple les lisiers, boues de stations d'épuration, compost, fumier, des résidus de l'industrie métallurgique, chimique y compris la chimie des phosphates, agro-alimentaire, de boues de stations d'épuration, de guano, des cendres d'os, de lisiers, de fumiers, de déchets verts

En règle générale, dans le cas où un déficit en Ca serait présent, le calcium peut être ajouté sous forme de chaux, de lait de chaux, de carbonate de calcium, de chlorure de calcium et éventuellement de roche phosphatée contenant du calcium.

Par les termes « roche de phosphate conventionnelle », on entend au sens de la présente invention, une roche qui présente une analyse P₂O₅ typique supérieure à 25%, elle peut être bénéficiée ou non, c'est-à-dire qu'elle subit un ou plusieurs traitements physico-chimiques (broyage, criblage lavage, flottation) qui permettent d'augmenter le titre (P2O5) de la roche ou non.

Par les termes « roche de phosphate de faible teneur en P₂O₅ », on entend au sens de la présente invention, une roche qui présente une analyse P₂O₅ typique inférieure à 25%, préférentiellement à 20%.

Par les termes « cendres, de boues de stations d'épuration, des cendres d'os, de lisiers et de toute matière première présentant une teneur en phosphate inférieure ou égale à 40% en poids de P₂O₅ par rapport au poids total de la matière première » on entend des sources de phosphates secondaires, généralement difficilement valorisables, comme par exemple, des cendres issues de boues de stations d'épuration, de matière végétale (bois, son de blé,), des cendres issues de clos d'équarrissage, des co-produits de l'incinération de déchets ou de biomasse pour produire de l'énergie.

Plus particulièrement, dans le procédé selon la présente invention, ledit composé purifié à base de phosphate est un phosphate monocalcique MCP, un phosphate bicalcique DCP, plus particulièrement un phosphate bicalcique DCP de grade alimentaire (alimentation humaine ou animale), un acide phosphorique et ses dérivés, comme par exemple issu directement de ladite première phase liquide ou un acide phosphorique produit à partir dudit DCP.

Par les termes « phosphate bicalcique (DCP) », on entend un phosphate bicalcique (DCP) (en anglais dibasic calcium phosphate ou dicalcium phosphate) de formule CaHPO₄ qui peut être sous forme anhydre (DCPA), ou dihydratée (DCPD).

Par les termes «phosphate bicalcique (DCP) de grade alimentaire », on entend tout DCP à destination de l'alimentation animale (en particulier le domaine du Feed Grade et du Pet Food), à destination de l'alimentation pour l'homme et à destination de l'industrie des soins dentaires et bucco-dentaires.

Dans une mode de réalisation préféré du procédé selon la présente invention, ladite deuxième phase liquide est recyclée par introduction dans ladite ou lesdites cuves d'attaque.

D'autres formes de réalisation du procédé suivant l'invention sont indiquées dans les revendications annexées. Un phosphate bicalcique DCP sous forme anhydre, ou dihydratée obtenu par le procédé selon l'invention présente une teneur en chlorures inférieure ou égale à 0,025 % en poids par rapport au poids total dudit phosphate bicalcique, et/ou une teneur en fluorure inférieure ou égale à 2% en poids par rapport au poids total dudit phosphate bicalcique, et/ou une teneur en Na₂0 inférieure ou égale à 0,15 % en poids, par rapport au poids total dudit phosphate bicalcique.

Plus particulièrement, un phosphate bicalcique DCP sous forme anhydre, ou dihydratée obtenu par le procédé selon l'invention présente une teneur en chlorures inférieure ou égale à 0,02 % en poids par rapport au poids total dudit phosphate bicalcique, et une teneur en fluorures inférieure ou égale à 1 % en poids par rapport au poids total dudit phosphate bicalcique, plus particulièrement, comme additif pour l'alimentation animale.

Alternativement, un phosphate bicalcique DCP sous forme anhydre, ou dihydratée obtenu par le procédé selon l'invention présente une teneur en chlorures inférieure ou égale à 0,02 % en poids par rapport au poids total dudit phosphate bicalcique, plus particulièrement comme ingrédient dans les engrais ou encore comme source de phosphate à attaquer dans la production d'acide phosphorique.

D'autres formes de réalisation du Phosphate bicalcique suivant l'invention sont indiquées dans les revendications annexées. Une utilisation du phosphate bicalcique DCP sous forme anhydre, ou dihydratée obtenu par le procédé selon l'invention présentant une teneur en chlorures inférieure ou égale à 0,02 % en poids par rapport au poids total dudit phosphate bicalcique, et une teneur en fluorures inférieure ou égale à 1 % en poids par rapport au poids total dudit phosphate bicalcique se situe dans l'alimentation animale, en particulier pour le feed grade (bétail, volaille, aquaculture, élevages porcins) et les animaux domestiques. Une utilisation du phosphate bicalcique DCP sous forme anhydre, ou dihydratée obtenu par le procédé selon l'invention présentant une teneur en chlorures inférieure ou égale à 0,02 % en poids par rapport au poids total dudit phosphate bicalcique, se situe plus particulièrement comme ingrédient dans un engrais ou comme source phosphatée pour la production d'acide phosphorique.

Avantageusement, le phosphate bicalcique DCP sous forme anhydre, ou dihydratée obtenu par le procédé selon l'invention présente une teneur en chlorures inférieure ou égale à 0,025 % en poids par rapport au poids total dudit phosphate bicalcique, et/ou une teneur en fluorures inférieure ou égale à 2% en poids par rapport au poids total dudit phosphate bicalcique, et/ou une teneur en Na₂0 inférieure ou égale à 0,15 % en poids, par rapport au poids total dudit phosphate bicalcique.

Plus particulièrement, le phosphate bicalcique DCP sous forme anhydre, ou dihydratée obtenu par le procédé selon l'invention présente une teneur en chlorures inférieure ou égale à 0,02 % en poids par rapport au poids total dudit phosphate bicalcique.

De manière avantageuse, le phosphate bicalcique DCP sous forme anhydre, ou dihydratée obtenu par le procédé selon la présente invention présente une teneur en fluorures inférieure ou égale à 1 % en poids par rapport au poids total dudit phosphate bicalcique.

D'autres caractéristiques, détails et avantages de l'invention ressortiront de la description donnée ci-après, à titre non limitatif et en faisant référence aux exemples.

Le procédé selon la présente invention présente une série d'avantages permettant la mise en œuvre d'un procédé concurrentiel. En effet, il permet d'utiliser de l'acide sulfurique dilué dont la concentration est par exemple inférieure à 14 %, de préférence entre 0,5 et 10 %, en particulier entre 1 et 7 %, plus particulièrement entre 2 et 5 %, plus spécifiquement entre 3 et 4 % en poids par rapport au poids total de l'acide sulfurique dilué, ou encore un acide sulfurique de recyclage, ce qui diminue le coût des matière premières. Il permet, sans toutefois y être limité, d'attaquer des sources de phosphates diverses, comme par exemple des roches à faible teneur en P₂O₅ ou des sources secondaires de phosphore.

Le fait de travailler en sous-stœchiométrie au sens de la présente invention avec un ratio SO₄/Ca entre par exemple 0,68 et 0,8 permet une économie de 20 à 25% en H₂SO₄ et un rendement d'extraction avantageusement supérieur à 85%, de préférence supérieur à 90%.

Le temps d'attaque est relativement faible, pouvant être aussi faible que 90 minutes ou moins, comme par exemple entre 30 et 60 minutes.

La température d'attaque est également relativement faible par rapport à un procédé d'attaque conventionnel comme par exemple entre 40°C et 60°C en comparaison de température conventionnelles entre 75 et 95°C, ce qui permet une économie énergétique.

La teneur en P₂O₅ en phase liquide dans la première suspension est de préférence comprise entre 1 et 5%, en particulier entre 1,5 et 3,5 %, voire de 2 à 3 % en poids par rapport au poids total de la première phase liquide.

Le procédé selon la présente invention permet en outre d'obtenir un taux de purification de plus de 50%, de préférence de plus de 60% en poids en As, Al, U, Th, Na par rapport au poids d'origine de ces éléments contenus dans la source phosphatée.

Plus particulièrement, la présente invention se rapporte, sans toutefois y être limitée à un DCP, par exemple obtenu par le procédé selon la présente invention ayant des teneurs en chlorure et en fluorure qui rendent possible les applications dans l'alimentation humaine ou animale, à savoir une teneur en chlorures inférieure à 0,025%, pouvant aller jusqu'à des teneurs aussi faibles que 1 ppm et en fluorure inférieure à 2 %, pouvant aller jusqu'à des teneurs aussi basse que 0,1 % en poids par rapport au poids total du DCP.

De préférence, le DCP comporte de faibles teneurs en S0₃ résiduel dû à l'attaque à l'acide sulfurique très dilué. La teneur en Na₂0 est également inférieure à 0,15% en poids par rapport au poids total du DCP dans certaines formes de réalisation.

Dans un produit DCP avantageux, la teneur en MgO est également inférieure à 1% en poids par rapport au poids total du DCP.

Plus particulièrement, un DCP avantageux obtenu par le procédé selon la présente invention présente une teneur en Sr inférieure à 100 ppm ; de préférence inférieure à 50 ppm, plus particulièrement inférieure à 10 ppm, plus spécifiquement inférieure à 1 ppm par rapport au DCP.

Le DCP obtenu par le procédé selon la présente invention présente en outre une teneur en Th typiquement inférieure à 5 ppm par rapport au DCP.

Similairement, la teneur en Mn dans le DCP obtenu par le procédé selon la présente invention est inférieure à 10 ppm par rapport au DCP.

Typiquement, la teneur en Mo dans le DCP obtenu par le procédé selon la présente invention est inférieure à 2 ppm par rapport au DCP.

Enfin, le DCP obtenu par le procédé selon la présente invention présente de préférence une teneur en U₃O₈ inférieure à 32 ppm.

En outre objet est une composition de phosphate bicalcique DCP comprenant
a) une teneur en CaO supérieure ou égale à 40 % en poids par rapport au poids total dudit phosphate bicalcique
b) une teneur en chlorures inférieure ou égale à 0,020 % en poids par rapport au poids total dudit phosphate bicalcique
c) une teneur en fluorures inférieure ou égale à 2 % en poids par rapport au poids total dudit phosphate bicalcique,
d) une teneur en Na20 inférieure ou égale à 0,15 % en poids
par rapport au poids total dudit phosphate bicalcique Comme on peut le constater le DCP obtenu par le procédé selon la présente invention
présente les qualités requises pour une utilisation dans l'alimentation humaine ou animale ainsi que dans les applications techniques.

### Exemples.-

### Exemple 1.- attaque d'une source de phosphate à l'échelle de laboratoire

100 g de source de phosphate (roche phosphate) contenant 30,5 g de P₂O₅, 49,5 % d'équivalent CaO, 3,95 % de fluor, 0,308 % d'équivalent Fe₂O₃, 0,547 % d'équivalent Al₂O₃ et 0,303 % d'équivalent MgO, en poids par rapport au poids de la source de phosphate est mise en contact avec de l'acide sulfurique dilué à une concentration de 2% pour un temps d'attaque de 30 minutes, une température d'attaque de 60°C et suivant le ratio molaire SO₄/Ca de 0,8. Le ratio molaire SO₄/Ca définit la quantité d'acide nécessaire à l'attaque de la source de phosphate contenant le Ca à l'entrée de la cuve d'attaque.

Une fois tous les ajouts effectués, on laisse agiter une demi-heure avant la filtration.

On filtre ensuite la suspension obtenue sous vide sur un filtre büchner. Les différentes quantités obtenues sont notées et les produits sulfate de calcium et phase liquide sont analysées.

Dans le protocole de laboratoire, il s'agit d'un processus en batch, sans lavage. Toutefois le lavage a été extrapolé et la quantité de P₂O₅ dans le liquide d'imprégnation du gâteau de filtration a été calculée.

Le rendement d'attaque est calculé selon le calcul suivant : (Masse de P₂O₅ dans le filtrat + masse de P₂O₅ dans le liquide d'imprégnation du gâteau de filtration)/(masse totale de P₂O₅ dans la source phosphatée). La teneur en P₂O₅ dans le liquide d'imprégnation correspond au P₂O₅ qui sera récupérable par lavage du gâteau en procédé industriel.

La quantité d'acide sulfurique dilué ajoutée est de 3499 g pour une teneur en SO₄ de 70,2 g. Le ratio SO₄/Ca est de 0,8, dû à la teneur en calcium de la source de phosphate.

La phase liquide récupérée présente un volume de 3,09 litres pour une masse de 3125 g, un pH de 2,1. La teneur en P₂O₅ dans la phase liquide est de 0,83 % et la teneur en SO₃ est de 0,16 % en poids par rapport au poids de la phase liquide. La masse de P₂O₅ dans le liquide d'imprégnation est de 1,2 g.

Le ratio molaire CaO/P₂O₅ dans la première solution est de 0,58, tandis que la teneur en CaO résiduelle dans la phase liquide est de 0,19 % en poids par rapport au poids de la phase liquide.

Le rendement de l'attaque en P₂O₅ est de 89 %. Comme on peut le constater, malgré l'utilisation d'acide sulfurique peu concentré à 2% et des conditions d'attaque sous-stœchiométriques pour un temps total d'attaque de seulement 30 minutes, le rendement d'attaque en P₂O₅ est significativement élevé.

### Exemple 2.- attaque d'une source de phosphate à l'échelle de laboratoire

150 g de source phosphatée (roche) contenant 15,8 g de P₂O₅, 27,6 % d'équivalent CaO, 2,2 % de fluor, 2,37 % d'équivalent Fe₂O₃, 2,88 % d'équivalent Al₂O₃ et 0,416 % d'équivalent MgO, en poids par rapport au poids de la source de phosphate est mise en contact avec de l'acide sulfurique dilué à une concentration de 5 % pour un temps d'attaque de 30 minutes, une température d'attaque de 40°C et suivant le ratio SO₄/Ca de 0,8 selon le protocole de l'exemple 1 :
La quantité d'acide sulfurique dilué ajoutée est de 1131 g pour une teneur en SO₄ de 61,0 g. Le ratio SO₄/Ca est de 0,8, dû à la teneur en calcium de la source de phosphate.

La phase liquide récupérée présente un volume de 0,955 litre pour une masse de 976 g, un pH de 1,8. La teneur en P₂O₅ dans la phase liquide est de 1,97 % et la teneur en SO₃ est de 0,27 % en poids par rapport au poids de la phase liquide. La masse de P₂O₅ dans le liquide d'imprégnation est de 3,24 g.

Le ratio molaire CaO/P₂O₅ dans la première solution est de 0,43, tandis que la teneur en CaO résiduelle dans la phase liquide est de 0,33 % en poids par rapport au poids de la phase liquide.

Le rendement de l'attaque en P₂O₅ est de 95 %. Comme on peut le constater, malgré l'utilisation d'acide sulfurique peu concentré à 5% et d'une source de phosphate contenant très peu de phosphates, dans des conditions d'attaque sous-stœchiométriques pour un temps total d'attaque de seulement 30 minutes, le rendement d'attaque en P₂O₅ est significativement élevé.

### Exemple 3.- attaque d'une source de phosphate à l'échelle de laboratoire

100 g de source de phosphate (roche phosphate) contenant 30,5 g de P₂O₅, 49,5 % d'équivalent CaO, 3,95 % de fluor, 0,308 % d'équivalent Fe₂O₃, 0,547 % d'équivalent Al₂O₃ et 0,303 % d'équivalent MgO, en poids par rapport au poids de la source de phosphate est mise en contact avec de l'acide sulfurique dilué à une concentration de 5% pour un temps d'attaque de 30 minutes, une température d'attaque de 60°C et suivant le ratio SO₄/Ca de 0,8 selon le protocole de l'exemple 1.

La quantité d'acide sulfurique dilué ajoutée est de 1398 g pour une teneur en SO₄ de 70,1 g. Le ratio SO₄/Ca est de 0,8, dû à la teneur en calcium de la source de phosphate.

La phase liquide récupérée présente un volume de 1,13 litre pour une masse de 1161 g, un pH de 2,2. La teneur en P₂O₅ dans la phase liquide est de 2 % et la teneur en SO₃ est de 0,20 % en poids par rapport au poids de la phase liquide. La masse de P₂O₅ dans le liquide d'imprégnation est de 2,6 g.

Le ratio molaire CaO/P₂O₅ dans la première solution est de 0,38, tandis que la teneur en CaO résiduelle dans la phase liquide est de 0,30 % en poids par rapport au poids de la phase liquide.

Le rendement de l'attaque en P₂O₅ est de 85 %. Comme on peut le constater, malgré l'utilisation d'acide sulfurique peu concentré à 5% et des conditions d'attaque sous-stœchiométriques pour un temps total d'attaque de seulement 30 minutes, le rendement d'attaque en P₂O₅ est significativement élevé.

### Exemple Comparatif 1.- attaque d'une source de phosphate à l'échelle de laboratoire

100 g de source de phosphate (roche phosphate) contenant 30,5 g de P₂O₅, 49,5 % d'équivalent CaO, 3,95 % de fluor, 0,308 % d'équivalent Fe₂O₃, 0,547 % d'équivalent Al₂O₃ et 0,303 % d'équivalent MgO, en poids par rapport au poids de la source de phosphate est mise en contact avec de l'acide sulfurique dilué à une concentration de 5% pour un temps d'attaque de 30 minutes, une température d'attaque de 60°C mais cette fois suivant le ratio molaire SO₄/Ca de 1 selon le protocole de l'exemple 1.

La quantité d'acide sulfurique dilué ajoutée est de 1747 g pour une teneur en SO₄ de 87,2 g. Le ratio SO₄/Ca est de 1, dû à la teneur en calcium de la source de phosphate.

La phase liquide récupérée présente un volume de 1,4 litre pour une masse de 1429 g, un pH de 2,1. La teneur en P₂O₅ dans la phase liquide est de 1,63 % et la teneur en SO₃ est de 0,61 % en poids par rapport au poids de la phase liquide. La masse de P₂O₅ dans le liquide d'imprégnation est de 3,5 g.

Le ratio molaire CaO/P₂O₅ dans la première solution est de 0,26, tandis que la teneur en CaO résiduelle dans la phase liquide est de 0,17 % en poids par rapport au poids de la phase liquide.

Le rendement de l'attaque en P₂O₅ est de 88 %. Comme on peut le constater, dans l'exemple comparatif dans des conditions stoechiométriques, La consommation spécifique d'acide sulfurique est plus importante pour un rendement d'attaque du même ordre. La consommation de source de calcium nécessaire à la neutralisation sera également plus importante.

### Exemple 4.- Attaque sous-stoechiométrique de roche phosphatée à l'échelle pilote

Le pilote comprend 3 cuves agitées et thermostatisées à l'aide de doubles enveloppes chauffées par de l'huile. Les cuves se suivent par débordement, les deux premières ont une capacité de 20 litres et la troisième à une capacité de 30 litres et sert uniquement de tampon avant la filtration.

10 litres d'eau sont versés dans la première cuve et sont chauffés jusque la température de travail. La source phosphatée ainsi que l'acide sulfurique dilué sont alimentés dans le premier réacteur avec des débits correspondants aux conditions d'attaque désirées (ratio molaire SO₄/CaO, temps d'attaque, concentration H₂SO₄ pour l'attaque de la source phosphatée, teneur en P₂O₅ dans la cuve d'attaque).

La suspension produite déborde dans le deuxième réacteur. Le deuxième réacteur est prévu pour effectuer une neutralisation avant filtration. La neutralisation avant filtration n'est pas réalisée systématiquement.

La suspension déborde enfin dans le troisième réacteur qui sert à alimenter la cellule de filtration.

Une quantité de suspension est filtrée toutes les 30 minutes. Deux sortes de filtrations sont réalisées alternativement :
- **La filtration pour recyclage dans le réacteur d'attaque :** le gâteau de filtration n'est pas lavé et est recyclé dans le premier réacteur (d'attaque) pour augmenter le taux de solides dans le milieu de réaction. La phase liquide (filtrat) est versée dans un fût et est conservée pour l'étape de neutralisation et de production du DCP. Cette étape de filtration n'est certainement pas requise à l'échelle industrielle. Elle peut bien entendu être réalisée, mais n'est pas nécessaire. A l'échelle pilote, il est avantageux de réaliser cette étape étant donné qu'il est préférable d'augmenter la teneur en matière solide dans le réacteur d'attaque.
- **La filtration de production du sulfate de calcium :** ici, le gâteau de sulfate de calcium est lavé avec une quantité d'eau prédéterminée pour récupérer le P₂O₅ contenu dans le liquide d'imprégnation. La phase liquide ainsi que le filtrat de lavage sont versé dans le fût de récupération des filtrats. Le sulfate de calcium est déchargé pour être évacué.

L'installation est en régime stable, des échantillons de sulfate de calcium et de phase liquide (filtrats) sont prélevés pour analyses et les différents produits sont également analysés.

Le rendement est calculé comme suit : la masse de P₂O₅ dans la phase liquide (g/h) / masse de P₂O₅ dans la source de phosphate (g/h).

Une source de phosphate sous forme de roche contenant 30,3 % en poids de P₂O₅, 47,6 % d'équivalent CaO, 3,68 % de fluor, 0,144 % d'équivalent Fe₂O₃, 0,18 % d'équivalent Al₂O₃ et 0,542 % d'équivalent MgO, en poids par rapport au poids de la source de phosphate est ajoutée dans la cuve d'attaque en présence d'acide sulfurique dilué à 10% en poids par rapport au poids de l'acide dilué, selon un ratio molaire SO₄/Ca de 0,8. La température d'attaque est de 60°C et la durée de l'attaque est d'environ 1 heure. Le pH dans la cuve d'attaque est de 2,04. Le débit de roche est de 2,67 kg/h et le débit d'acide est de 17,5 litres/h. La teneur en P₂O₅ dans la suspension d'attaque est de 4,5 % en poids par rapport au poids total de la suspension.

Lors de la filtration, le débit de phase liquide récupérée est de 16,13 kg/h.

Le rendement d'attaque est de 93%.

Comme on peut le constater, les essais réalisés en laboratoire sont confirmés en pilote, le rendement d'attaque de la roche phosphatée en présence d'une acide sulfurique dilué et dans des conditions de faible teneur en P₂O₅ dans la cuve d'attaque (<6%) et de temps d'attaque court est particulièrement élevé alors que des conditions sous-stœchiométriques sont opérées

### Exemple 5.- Attaque sous-stoechiométrique de roche phosphatée à l'échelle pilote

Le pilote utilisé est celui de l'exemple 4.-, le même procédé que dans l'exemple 4.- y est mis en œuvre.

La même source de phosphate que dans l'exemple 4.- est ajoutée dans la cuve d'attaque en présence d'acide sulfurique dilué à 5 % en poids par rapport au poids de l'acide dilué, selon un ratio molaire SO₄/Ca de 0,7, dû à la teneur en calcium de la source de phosphate. La température d'attaque est de 60°C et la durée de l'attaque est d'environ 1 heure. Le pH dans la cuve d'attaque est de 2,5. Le débit de roche est de 3 kg/h et le débit d'acide est de 35,6 litres/h. La teneur en P₂O₅ dans la suspension d'attaque est de 2,32 % en poids par rapport au poids total de la suspension.

A la filtration, le débit de phase liquide récupérée est de 35,44 kg/h.

Le rendement d'attaque est de 94%.

Comme on peut le constater, par rapport à l'exemple 4.-, malgré la présence d'un acide sulfurique deux fois plus dilué, le rendement en P₂O₅ est même plus élevé.

### Exemple 6.- Attaque sous-stoechiométrique de roche phosphatée à l'échelle pilote

Le pilote utilisé est celui de l'exemple 4.-, le même procédé que dans l'exemple 4.- y est mis en œuvre, à l'exception du fait que dans le deuxième réacteur, soit le réacteur de neutralisation avant filtration, le pH a été ajusté à 2,48 par ajout de lait de chaux Ca(OH)₂.

Une source de phosphate sous forme de roche contenant 34,9 % en poids de P₂O₅, 49,8 % d'équivalent CaO, 3,78 % de fluor, 0,136 % d'équivalent Fe₂O₃, 0,386 % d'équivalent Al₂O₃ et 0,156 % d'équivalent MgO en poids par rapport au poids de la source phosphatée est ajoutée dans la cuve d'attaque en présence d'acide sulfurique dilué à 5 % en poids par rapport au poids de l'acide dilué, selon un ratio SO₄/Ca de 0,8 , dû à la teneur en calcium de la source de phosphate. La température d'attaque est de 60°C et la durée de l'attaque est d'environ 1 heure. Le pH dans la cuve d'attaque est de 2. Le débit de roche est de 2,6 kg/h et le débit d'acide est de 35,7 litres/h. La teneur en P₂O₅ dans la suspension d'attaque est de 2,10 % en poids par rapport au poids total de la suspension.

A la filtration, le débit de phase liquide récupérée est de 38,22 kg/h.

Le rendement d'attaque est de 92%.

### Exemple 7.- Attaque sous-stoechiométrique de roche phosphatée à l'échelle pilote

Le pilote utilisé est celui de l'exemple 4.-, le même procédé que dans l'exemple 4.- y est mis en œuvre.

Une source de phosphate sous forme de roche contenant 24,90 % en poids de P₂O₅, 40,5 % d'équivalent CaO, 2,54 % de fluor, 3,97 % d'équivalent Fe₂O₃, 1,13 % d'équivalent Al₂O₃ et 1,88 % d'équivalent MgO, en poids par rapport au poids de la source de phosphate est ajoutée dans la cuve d'attaque en présence d'acide sulfurique dilué à 5 % en poids par rapport au poids de l'acide dilué, selon un ratio SO₄/Ca de 0,8 , dû à la teneur en calcium de la source de phosphate. La température d'attaque est de 60°C et la durée de l'attaque est d'environ 1 heure. Le pH dans la cuve d'attaque est de 1,95. Le débit de roche est de 3,19 kg/h et le débit d'acide est de 34,5 litres/h. La teneur en P₂O₅ dans la suspension d'attaque est de 1,82 % en poids par rapport au poids total de la suspension.

A la filtration, le débit de phase liquide récupérée est de 37,91 kg/h.

Le rendement d'attaque est de 90%.

### Exemple 8.- Production de DCP à partir de roche phosphatée à l'échelle pilote

Pour la production de DCP, le pilote mis en œuvre pour réaliser l'attaque de la roche est utilisé de manière découplée de cette première attaque. Les équipements étant utilisés dès lors séquentiellement.

Le pilote utilisé est celui de l'exemple 4.-, Dans cet exemple, la phase liquide récupérée de la filtration de l'exemple 7 est traitée pour précipiter le DCP par neutralisation de la manière suivante :
De la chaux vive (ou du calcaire) est ajoutée au débit nominal dans le réacteur dans lequel la phase liquide récupérée de l'exemple 7 est introduite également, le pH est régulièrement contrôlé.

Quand le pH est égal à 5.5 / 6, la pompe d'alimentation de filtrat est démarrée. Le pH est contrôlé régulièrement et le débit d'alimentation de calcaire ou de chaux est adapté pour maintenir un pH compris entre 5.5 et 6.

La filtration est réalisée toutes les demi-heures à partir du réacteur tampon. Une fois sur deux, le gâteau de filtration contenant le sulfate de calcium est recyclé dans le premier réacteur d'attaque pour augmenter le taux de solides du milieu de réaction.

Le gâteau de production contenant le DCP précipité est récupéré et les eaux-mères sont stockées dans un fût. Des échantillons des produits (DCP et eaux-mères) sont prélevés pour être analysés.

La température pour la neutralisation est de 60°C. Le pH dans la première cuve est de 4,4 tandis qu'il s'élève à 5,55 dans la deuxième cuve. Le débit de chaux vive est de 1,05 kg/h.

Le rendement de précipitation du DCP est calculé par la formule (teneur en P₂O₅ dans le DCP / teneur en P₂O₅ initialement présente dans l'a solution MCP et acide) bilan P₂O₅ de l'opération est de 92 %.

### Exemple comparatif 2.- Attaque sous-stoechiométrique de roche phosphatée à l'échelle pilote

Le pilote utilisé est celui de l'exemple 4.-, le même procédé que dans l'exemple 4.- y est mis en œuvre.

La même source de phosphate que dans l'exemple 4.- est ajoutée dans la cuve d'attaque en présence d'acide sulfurique à 20 % en poids par rapport au poids de l'acide, selon un ratio SO₄/Ca de 0,8 , dû à la teneur en calcium de la source de phosphate. La température d'attaque est de 60°C et la durée de l'attaque est d'environ 1 heure. Le pH dans la cuve d'attaque est 1,73. Le débit de roche est de 5 kg/h et le débit d'acide est de 15,6 litres/h. La teneur en P₂O₅ dans la suspension d'attaque est de 7,10 % en poids par rapport au poids total de la suspension.

A la filtration, le débit de phase liquide récupérée est de 13,3 kg/h.

Le rendement d'attaque est de 65%.

Comme on peut le constater, par rapport à l'exemple 4.-, la présence d'un acide sulfurique plus concentré et d'une teneur en P₂O₅ supérieure à 6% fait chuter le rendement à 65%.

## Revendications

1. Procédé d'attaque acide d'une source de phosphate
comprenant du calcium
pour la production d'un composé purifié à base de phosphate comprenant les étapes de
a) une attaque acide à l'aide d'acide sulfurique de ladite source de phosphate, pendant une période de temps prédéterminée comprise entre 20 et 180 minutes avec formation d'une première suspension contenant une première matière solide et une première phase liquide dans laquelle la première matière solide est en suspension, ladite première matière solide comprenant au moins du sulfate de calcium et des impuretés, ladite première phase liquide comprenant de l'acide phosphorique et du phosphate monocalcique dissous, ladite attaque étant réalisée dans des conditions à l'entrée selon lesquelles le ratio molaire sulfate provenant de l'acide sulfurique ainsi qu'éventuellement de la source de phosphate au calcium est compris entre 0,6 et 0,8, et la teneur en P₂O₅ est inférieure à 6%,
b) une première filtration de ladite première bouille avec une séparation de ladite première matière solide de ladite première phase liquide,
c) une récupération à partir de ladite première phase liquide d'un composé purifié à base de phosphate.

2. Procédé selon la revendication 1, dans lequel ladite attaque acide a lieu dans 1, 2 ou plusieurs cuves d'attaque.

3. Procédé selon la revendication 1 ou la revendication 2, dans lequel la période de temps prédéterminée est inférieure à 120 minutes.

4. Procédé selon la revendication 2 ou la revendication 3, dans lequel la teneur en P₂O₅ dans la phase liquide dans la ou les cuves d'attaque est inférieure à 5%,.

5. Procédé selon l'une quelconque des revendications 2 à 4, dans lequel ladite attaque est réalisée à une température dans la ou les cuves d'attaque inférieure ou égale à 90°C.

6. Procédé selon l'une quelconque des revendications 2 à 5, dans lequel l'acide sulfurique est un acide sulfurique dilué, en particulier avant ajout dans la ou les cuves d'attaque.

7. Procédé selon la revendication 6, dans lequel ledit acide sulfurique dilué présente une concentration en H₂SO₄ inférieure ou égale à 13% en poids.

8. Procédé selon l'une quelconque des revendications précédentes, dans lequel ledit ratio molaire sulfate provenant de l'acide sulfurique ainsi qu'éventuellement de la source de phosphate au calcium présent dans la source de phosphate est compris entre 0,68 et 0,78.

9. Procédé selon l'une quelconque des revendications précédentes, comprenant en outre, une addition d'une base à ladite première suspension, avant filtration.

10. Procédé selon l'une quelconque des revendications 1 à 9, comprenant en outre, avant ladite étape de récupération à partir de ladite première phase liquide dudit composé purifié à base de phosphate, une addition d'une base à ladite première phase liquide après filtration avec formation d'une deuxième suspension comprenant une deuxième matière solide en suspension dans une deuxième phase liquide et une filtration de ladite deuxième suspension pour séparer ladite deuxième matière solide en suspension de ladite deuxième phase liquide, ledit composé purifié à base de phosphate étant ainsi récupéré de ladite deuxième phase liquide, provenant de la première phase liquide appauvrie en ladite deuxième matière solide.

11. Procédé selon l'une quelconque des revendications précédentes, dans lequel ladite première matière solide séparée de ladite première phase liquide est recyclée par introduction dans la première suspension.

12. Procédé selon l'une quelconque des revendications précédentes, dans lequel ladite source de phosphate contenant du calcium est choisie dans le groupe constitué de roche de phosphate conventionnelle, roche de phosphate de faible teneur en P₂O₅, de cendres, de boues de stations d'épuration, des cendres d'os, de lisiers de porc, de lisiers de poulets, de cendres de boues de station d'épuration, de boues de stations d'épuration, et de toute matière première présentant une teneur en phosphate inférieure à 30% en poids de P₂O₅ par rapport au poids total de la matière première.

13. Procédé selon l'une quelconque des revendications précédentes, dans lequel ledit composé purifié à base de phosphate est un phosphate monocalcique MCP, un phosphate bicalcique DCP, plus particulièrement un phosphate bicalcique DCP de grade alimentaire, un acide phosphorique, comme par exemple issu directement de ladite première phase liquide ou un acide phosphorique produit à partir dudit DCP.

14. Procédé selon l'une quelconque des revendications 10 à 13, dans lequel ladite deuxième phase liquide est recyclée par introduction dans ladite ou lesdites cuves d'attaque.

## Patentansprüche

1. Verfahren zum Säureätzen einer Calcium umfassenden Phosphatquelle für die Herstellung einer gereinigten Verbindung auf Phosphatbasis, umfassend die Schritte
a) einer Säureätzung der Phosphatquelle mittels Schwefelsäure während einer vorbestimmten Zeitspanne von zwischen 20 und 180 Minuten unter Bildung einer ersten Suspension, die einen ersten Feststoff und eine erste flüssige Phase enthält, in der der erste Feststoff sich in Suspension befindet, wobei der erste Feststoff mindestens Calciumsulfat und Verunreinigungen umfasst, wobei die erste flüssige Phase Phosphorsäure und gelöstes Monocalciumphosphat umfasst, wobei das Ätzen unter Einlassbedingungen durchgeführt wird, bei denen das molare Verhältnis von Sulfat aus der Schwefelsäure sowie gegebenenfalls der Phosphatquelle mit Calcium zwischen 0,6 und 0,8 liegt, und der Gehalt an P₂O₅ weniger als 6% beträgt,
b) einer ersten Filtration der ersten Aufschlämmung mit einer Abtrennung des ersten Feststoffs von der ersten flüssigen Phase,
c) einer Rückgewinnung einer gereinigten Verbindung auf Phosphatbasis aus der ersten flüssigen Phase.

2. Verfahren nach Anspruch 1, wobei das Säureätzen in 1, 2 oder mehreren Ätzbehältern erfolgt.

3. Verfahren nach Anspruch 1 oder Anspruch 2, wobei die vorbestimmte Zeitspanne weniger als 120 Minuten beträgt.

4. Verfahren nach Anspruch 2 oder Anspruch 3, wobei der Gehalt an P₂O₅ in der flüssigen Phase in dem oder den Ätzbehältern weniger als 5% beträgt.

5. Verfahren nach einem der Ansprüche 2 bis 4, wobei das Ätzen bei einer Temperatur in dem oder den Ätzbehältern von weniger als oder gleich 90 °C durchgeführt wird.

6. Verfahren nach einem der Ansprüche 2 bis 5, wobei die Schwefelsäure eine verdünnte Schwefelsäure ist, insbesondere vor der Zugabe in den oder die Ätzbehälter.

7. Verfahren nach Anspruch 6, wobei die verdünnte Schwefelsäure eine H₂SO₄-Konzentration von weniger als oder gleich 13 Gew.-% aufweist.

8. Verfahren nach einem der vorstehenden Ansprüche, wobei das molare Verhältnis von Sulfat aus der Schwefelsäure sowie gegebenenfalls aus der Phosphatquelle mit in der Phosphatquelle vorhandenem Calcium zwischen 0,68 und 0,78 liegt.

9. Verfahren nach einem der vorstehenden Ansprüche, ferner umfassend eine Zugabe einer Base zu der ersten Suspension vor der Filtration.

10. Verfahren nach einem der Ansprüche 1 bis 9, ferner umfassend vor dem Schritt der Rückgewinnung der gereinigten Verbindung auf Phosphatbasis aus der ersten flüssigen Phase eine Zugabe einer Base zu der ersten flüssigen Phase nach der Filtration unter Bildung einer zweiten Suspension, die einen zweiten Feststoff umfasst, der sich in einer zweiten flüssigen Phase in Suspension befindet, und eine Filtration der zweiten Suspension, um den zweiten Feststoff, der sich in Suspension befindet, von der zweiten flüssigen Phase abzutrennen, wobei die gereinigte Verbindung auf Phosphatbasis somit aus der zweiten flüssigen Phase zurückgewonnen wird, die aus der ersten flüssigen Phase an dem zweiten Feststoff abgereichert ist.

11. Verfahren nach einem der vorstehenden Ansprüche, wobei der von der ersten flüssigen Phase abgetrennte erste Feststoff durch Einbringen in die erste Suspension rezykliert wird.

12. Verfahren nach einem der vorstehenden Ansprüche, wobei die calciumhaltige Phosphatquelle ausgewählt ist aus der Gruppe bestehend aus herkömmlichem Phosphatgestein, Phosphatgestein mit niedrigem Gehalt an P₂O₅, Asche, Kläranlagenschlamm, Knochenasche, Schweinegülle, Hühnergülle, Kläranlagenschlammasche, Kläranlagenschlamm und jedes Rohmaterial mit einem Phosphatgehalt von weniger als 30 Gew.-% P₂O₅, bezogen auf das Gesamtgewicht des Rohmaterials.

13. Verfahren nach einem der vorstehenden Ansprüche, wobei die gereinigte Verbindung auf Phosphatbasis ein Monocalciumphosphat MCP, ein Dicalciumphosphat DCP, insbesondere ein Dicalciumphosphat DCP in Lebensmittelqualität, eine Phosphorsäure, wie beispielsweise direkt aus der ersten flüssigen Phase, oder eine aus dem DCP hergestellte Phosphorsäure ist.

14. Verfahren nach einem der Ansprüche 10 bis 13, wobei die zweite flüssige Phase durch Einbringen in den oder die Ätzbehälter rezykliert wird.

## Claims

1. A method of acid attack of a phosphate source comprising calcium for the production of a purified phosphate compound comprising the steps of
a) an acid attack using sulphuric acid of said phosphate source for a predetermined period of time between 20 and 180 minutes with formation of a first suspension containing a first solid material and a first liquid phase in which the first solid material is in suspension, said first solid material comprising at least calcium sulphate and impurities, said first liquid phase comprising phosphoric acid and dissolved monocalcium phosphate, said attack being carried out under inlet conditions in which the sulphate molar ratio from the sulphuric acid and optionally the phosphate source with calcium is between 0.6 and 0.8, and the content of P₂O₅ is lower than 6%,
b) a first filtration of said first slurry with a separation of said first solid material from said first liquid phase
c) recovering from said first liquid phase of a purified phosphate compound.

2. The method according to claim 1, wherein said acid attack takes place in 1, 2 or more attack tanks.

3. The method of claim 1 or claim 2, wherein the predetermined period of time is lower than 120 minutes.

4. The method according to claim 2 or claim 3, wherein the content of P₂O₅ in the liquid phase in the attack tank or tanks is lower than 5%.

5. The method according to any one of claims 2 to 4, wherein said attack is carried out at a temperature in the attack tank or tanks of less than or equal to 90°C.

6. The method according to any one of claims 2 to 5, wherein the sulphuric acid is a dilute sulphuric acid, in particular before addition to the attack tank or tanks.

7. The method according to claim 6, wherein said dilute sulphuric acid has a H₂SO₄ concentration of less than or equal to 13% by weight.

8. The method according to any one of the preceding claims, wherein said sulphate molar ratio from the sulphuric acid as well as optionally the phosphate source with calcium present in the phosphate source is between 0.68 and 0.78.

9. The method according to any one of the preceding claims, further comprising adding a base to said first suspension, prior to filtration.

10. The method according to any one of claims 1 to 9, further comprising, prior to said step of recovering from said first liquid phase of said purified phosphate compound, adding a base to said first liquid phase after filtration with formation of a second suspension comprising a second solid material in suspension in a second liquid phase and filtering said second suspension to separate said second solid material in suspension from said second liquid phase, whereby said purified phosphate compound is recovered from said second liquid phase, from the first liquid phase depleted in said second solid material.

11. The method according to any one of the preceding claims, wherein said first solid material separated from said first liquid phase is recycled by introduction into the first suspension.

12. The method according to any one of the preceding claims, wherein said calcium containing phosphate source is selected from the group consisting of conventional phosphate rock, low content of P₂O₅ phosphate rock, ash, sewage sludge, bone ash, pig manure, chicken manure, sewage sludge ash, sewage sludge, and any raw material having a content of phosphate of less than 30% by weight of P₂O₅ based on the total weight of the raw material.

13. The method according to any one of the preceding claims, wherein said purified phosphate compound is a monocalcium phosphate MCP, a dicalcium phosphate DCP, more particularly a food grade dicalcium phosphate DCP, a phosphoric acid, as for example directly from said first liquid phase or a phosphoric acid produced from said DCP.

14. The method according to any one of claims 10 to 13, wherein said second liquid phase is recycled by introduction into said attack tank or tanks.
